# EUROPÄISCHE PATENTSCHRIFT

(11) **EP 1 221 573 B1**
(45) Veröffentlichungstag und Bekanntmachung des Hinweises auf die Patenterteilung: **04.07.2007**
(21) Anmeldenummer: 01100412.4
(22) Anmeldetag: 08.01.2001
(51) Int. Cl.: F23K 1/00

(54) **Zapfgasverfahren zur Gewinnung von elektrischer und thermischer Energie aus Biomassekesseln**
Process for recuperation of thermal and electrical energy from gases of biomass combustion
Procédé de récuperation d'énergie thermique et électrique des gaz de combustion de biomasse

(43) Veröffentlichungstag der Anmeldung: 10.07.2002
(73) Patentinhaber: Stöger, Josef, Jun., 5061 Elsbethen (AT)
(72) Erfinder: Stöger, Josef, Jun., 5061 Elsbethen (AT)

(56) Entgegenhaltungen:
- DE-C- 4 342 165
- FR-A- 2 389 767
- US-A- 4 852 344

## Beschreibung

Die Erfindung betrifft das Verfahren aus herkömmlichen Biomassekesseln durch Entnahme eines Teiles oder der gesamten verbrannten heißen Gase einen Teil der thermischen Energie in Strom umzuwandeln.

### Beschreibung der Erfindung:

Durch die Zufuhrschnecke (1) wird aus dem Biomasselagerraum Hackgut, Rinde oder Pellets dem Biomassebrenner (2) automatisch zugeführt. Die entstehende Asche wird entweder in einer Aschelade (3) aufgefangen oder ebenfalls automatisch ausgetragen. Zusätzlich kann eventuell noch ein Biogas- oder Bioöl-(z.B. Rapsöl) - Brenner (4) angeflanscht werden. Bis hierher ist das Verfahren bereits jahrelang erprobt.
Die Erfindung besteht daraus, daß aus dem Brennraum (5) mittels des Zapfgaskanales (7a) die heißen, vollstzändig verbrannten Gase vor den Heiztauscherflächen abgezogen werden. Dies geschieht durch das drehzahlgesteuerte Zapfgasgebläse (8). Der Stelltrieb (7) öffnet oder schließt die Verbindung zum Rückgaskanal, ist die Klappe offen, so arbeitet der Biomassekessel ohne das Zapfgassystem (z.B. für Wartungsarbeiten). Wird die Verbindung ganz oder teilweise geschlossen wird mehr oder weniger Zapfgas aus dem Brennraum entnommen. Durch den Einbau eines Kurzschlußkanales (9) mit regelbarer Klappe können die heißen Zapfgase mit unterschiedlicher Menge an kühleren Gasen gemischt werden, dadurch kann die jeweis erforderliche Temperatur genau geregelt werden. Durch den Rückgaskanal (11) werden die Gase den Wärmetauscherflächen des Biomassekessels wieder zugeführt

Die entzogene Wärmeenergie erwärmt im Verdampfer (10) Thermoöl (ORC - Prozess). Dieses Öl wird mittels des drehzahlgesteuerten Zahnradpumpe (12) gepumpt. Für die Anfahrphase ist eine Umgehungsleitung (13) vorgesehen.
Nach Erreichen der Betriebstemperatur und des Betriebsdrucks öffnet sich das Ventil zu Düse (14), das Thermoöl verdampft, und treibt die Turbine (16) an.
Die abgearbeiteten Gase werden durch den Kondensator (17) wieder verflüssigt. Das Thermoölsystem ist mit Füll- und Entleerungsleitung (18) und 2 Sicherheitsgruppen (15+18) mit jeweils einen Überdurckventil, eines Druckausgleichbehälters und Druck- bzw. Temperatursensoren ausgestattet. Des weiteren sind Rückflußverhinderer und Stellventile vorhanden.

Die Drehzahl der Türbine wird durch das Getriebe (21) reduziert, und die mechanische Energie im Generator (22) in elektrische Energie umgewandelt.
Die Kühlwärme des Kondensators (17) wird ins Heizsystem (19) gespeist.
Das System besteht weiters aus dem Elektrikteil (23) für den Netzparallelbetrieb und der Steuerungseinheit (24).

Das im Dokument D beschriebene Verfahren (Patent FR-A-2 2 389 767 arbeitet nach einem anderen System. Es sind hier 2 Turbinen gekoppelt, wobei zudem der Verbrennungskessel unter Druck gesetzt wird. Die Biomasse wird daher unter Druck verbrannt.

Vorteile der Erfindung:
1.) Es können ohne große Änderungen herkömmliche Biomassekessel verwendet werden, bzw. bestehende Anlagen nachgerüstet werden. Durch den zusätzlichen Brenner können auch andere Bioenergieträger verwendet werden.
2.) Die Verbrennungsprozesse laufen weitgehend unter optimalen Bedingungen ab, sodaß keine zusätzlichen Luftschadstoffe entstehen.
3.) Die Belastung der einzelne Baugruppen ist gering, somit auch der Verschleiß, es dürfte damit eine weit höhere Lebensdauer der Anlagenkomponenten erreicht werden als bisherige Kraft-Wärme-Koppelungsanlagen.
4.) Die Wärmeerzeugung kann auch bei Wartungs- und Reperaturarbeiten aufrecht erhalten werden.
5.) Die Anlagenkomponenten bestehen Großteils aus herkömmlichen Industreikomponenten:
   z.B. Verdampfer: Wärmetauscher von Dampfstrahlern,
   Kondensator: Ölkühler von Hydraulikaggregaten, als Turbine könnte ein Turbolader (Turbinenteil) eingesetzt werden. Reperaturen können daher leicht durchgeführt werden, bzw. Ersatzteile sind leicht erhältlich.
6.) Das Thermoöl wird keinen überhöhten Temperaturen ausgesetzt.
7.) Die Schallemmissionen sind wesentlich geringer als bei anderen Systemen (Verbrennungsmotoren).

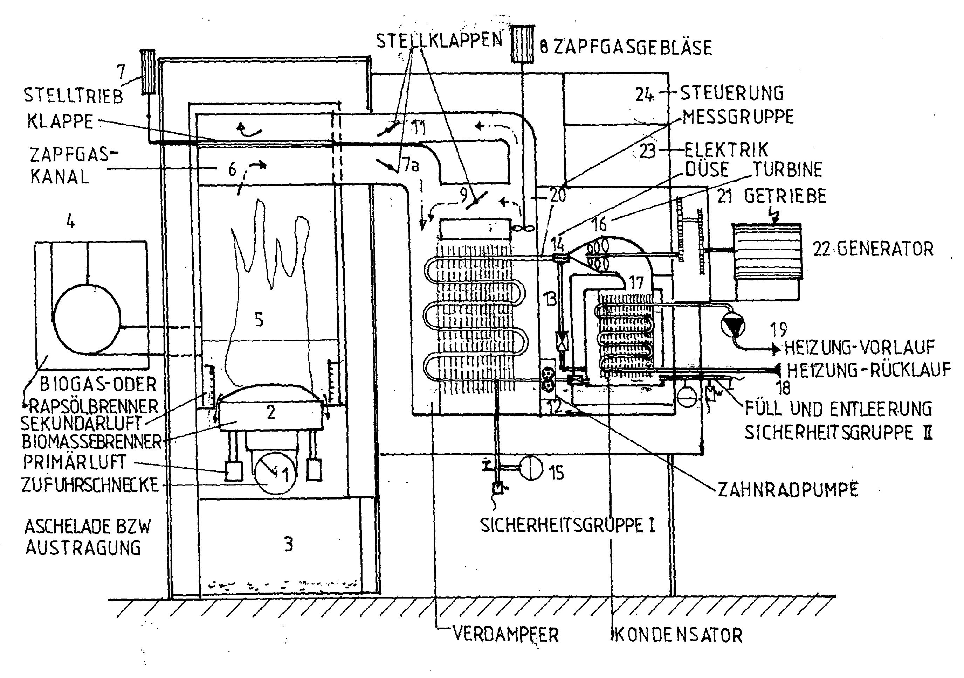

## Patentansprüche

1. Zapfgasverfahren zur Gewinnung elektrischer und thermischer Energie aus Biomassekesseln bei dem die heißen, vollständig verbrannten Gase vor den Heiztauscherflächen des Biomassekessels mittels eines Zapfgaskanales (7a) abgezogen werden, im Verdampfer (10) Thermoöl erwärmen und durch den Rückgaskanal (11) den Wärmetauscherflächen des Biomassekessels wieder zugeführt werden, wobei das erwärmte Öl in einer Düse (14) verdampft eine Turbine (16) antreibt und nachfolgend in einem Kondensator wieder verflüssigt werden.

## Claims

1. Tapping gas process for the recuperation of electrical and thermal energy from biomass kettles, whereby the hot, fully combusted gases in front of the heat exchanger surfaces of the biomass kettle are drawn off by means of a tapping gas channel (7a), heat up thermal oil in the evaporator (10) and are than fed back through the return gas channel (11) to the heat exchanger surfaces of the biomass kettle, whereby the heated oil is evaporated in a nozzle (14), drives a turbine (16) and is subsequently liquefled in a condenser.

## Revendications

1. Procédure de soutirage de gaz pour produire de l'énergie électrique et thermique à partir de chaudières de biomasse, au cours de laquelle des gaz très chauds et entièrement brûlés sont prélevés avant les surfaces de l'échangeur thermique de la chaudière par le biais d'une conduite de soutirage (7a), réchauffent de l'huile thermique dans l'évaporateur (10) avant d'être réacheminés
jusqu'aux surfaces de l'échangeur thermique de la chaudière de biomasse à travers le canal des gaz de refoulement (11). Ce faisant, l'huile réchauffée dans une buse (14) s'évapore et entraîne une turbine (16) avant de se reliquéfier dans un condensateur.
